# EUROPEAN PATENT APPLICATION

(11) **EP 4 177 858 A1**
(43) Date of publication of application: **10.05.2023**
(21) Application number: 22216854.4
(22) Date of filing: 15.07.2019
(51) Int. Cl.: G08B 13/00, G08B 25/00

(54) **CONTROL UNIT FOR AN ALARM SYSTEM**

(30) Priority: 16.07.2018 ES 201830713
(62) Divisional of application: 19186362.0
(71) Applicant: Verisure Sàrl, 1290 Versoix (CH)
(72) Inventor: Morgan, Russell, 1290 Versoix (CH); Zander, Johan, 1290 Versoix (CH); Nilsson, Christoffer, 1290 Versoix (CH); Zielinski, Marcin, 1290 Versoix (CH); Thorsander, Simon, 1290 Versoix (CH); Westman, Kajsa, 1290 Versoix (CH); Dittmer, Jacob, 1290 Versoix (CH); Andersson Reimer, Roger, 1290 Versoix (CH)
(74) Representative: Dennemeyer & Associates S.A.

(57) **Abstract**

Provided is a control unit for an alarm system for a home, the home having multiple points of entry, including at least one entrance door and at least one other possible point of entry to the home. The alarm system having a sound generating device, a user interface, a disarming interface and intrusion detection devices for possible points of entry to the home, the intrusion detection devices associated with the entrance door(s) being marked in the control unit as an expected entry and the all other intrusion detection devices each being marked as an unexpected entry.

The control unit has a reaction strategy module to choose a context-based reaction, the reaction strategy module being arranged to receive signals from at least the disarming interface, the user interface and the intrusion detection devices. The control unit stores:
an association between an expected entry status and a first intrusion detection device, the first intrusion detection device being associated with an entrance door of the building; an association between an unexpected entry status and one of the other intrusion detection devices; and for each of the intrusion detection devices an association with either an expected entry status or an unexpected entry status.

The control unit is configured to react to a signal (A) received from an intrusion detection device for which there is stored an association with an expected entry status by providing a first response, and to react to a signal received from an intrusion detection device for which an association with an unexpected entry status is stored by providing a second response different from the first response.

## Description

The invention relates to a control unit for an alarm system for a home, to an alarm system for a home, an alarm installation and corresponding methods.

Alarm systems for buildings are generally known. Typically, they comprise a control unit and a couple of intrusion detection devices, in particular magnet sensors which send a signal when a door or a window is being opened. After receipt of such signal, the user has a predefined time period within which he has to disarm or deactivate the alarm system, for example by entering a pin or code. If the alarm system is not deactivated within the predefined time period, the control unit assumes that there is an alarm situation.

The term "building" here refers to small businesses and homes. These can be houses or flats within a house.

The disadvantage with the known alarm systems is that they respond to different situations in a very static manner.

The object of the invention is to improve the user experience with the alarm system.

To this end, the invention provides according to a first aspect a method of operating an alarm system, the method comprising the following steps: Upon receipt of a signal from an intrusion detection device, a control unit starts a time period within which a user is invited to disarm the alarm system. Upon lapse of the predefined time period, the control unit chooses one of a plurality of predefined context-based reactions.

Further, the invention provides according to a second aspect an alarm system for a building, having a control unit, a sound generating device, a user interface, a disarming interface and at least one intrusion detection device, the control unit having a reaction strategy module receiving signals from at least the disarming interface, the user interface and the at least one intrusion detection device for choosing a context-based reaction strategy. Furthermore, the invention provides an alarm installation comprising an alarm system as defined above and a remote operation centre, the control unit of the alarm system being connected to the operation centre via internet and/or GSM.

The invention further provides according to a third aspect a control unit for an alarm system for a home, the home having multiple points of entry, the points of entry including at least one entrance door and at least one other possible point of entry to the home, the alarm system having a sound generating device, a user interface, a disarming interface and intrusion detection devices for possible points of entry to the home, the intrusion detection devices associated with the entrance door(s) being marked in the control unit (10) as an expected entry and the all other intrusion detection devices each being marked as an unexpected entry in the control unit (10), the control unit having a reaction strategy module to choose a context-based reaction (C), the reaction strategy module being arranged to receive signals from at least the disarming interface, the user interface and the intrusion detection devices; the control unit storing: an association between an expected entry status and a first intrusion detection device, the first intrusion detection device being associated with an entrance door of the building; an association between an unexpected entry status and one of the other intrusion detection devices; the control unit storing for each of the intrusion detection devices an association with either an expected entry status or an unexpected entry status; and the control unit being configured to: react to a signal (A) received from an intrusion detection device for which there is stored an association with an expected entry status by providing a first response; and react to a signal received from an intrusion detection device for which an association with an unexpected entry status is stored by providing a second response different from the first response.

According to a fourth aspect there is provided an alarm system for a home, the home having multiple points of entry, the points of entry including at least one entrance door and at least one other possible point of entry to the home, the alarm system having a sound generating device, a user interface, a disarming interface and intrusion detection devices for possible points of entry to the home, and a control unit according to any variant of the third aspect, the intrusion detection devices associated with the entrance door(s) being marked in the control unit (10) as an expected entry and the all other intrusion detection devices each being marked as an unexpected entry in the control unit (10).

According to a fifth aspect there is provided an alarm installation comprising an alarm system according to the fourth aspect installed in a home having multiple points of entry, the points of entry including at least one entrance door and at least one other possible point of entry to the home, and a remote operation centre, the control unit (10) of the alarm system being connected to the operation centre via the Internet and/or a mobile network (e.g. GSM).

According to a sixth aspect there is provided a method performed by a control unit (10) of an alarm system for a home having multiple points of entry, the points of entry including at least one entrance door and at least one other possible point of entry to the home, intrusion detection devices being provided for possible points of entry, the intrusion detection devices associated with the entrance door(s) being marked in the control unit (10) as an expected entry and all the other intrusion detection devices each being marked as an unexpected entry in the control unit (10), the method comprising the control unit (10) providing a first context-based reaction to a signal (A) received from an intrusion detection device for which there is stored an association with an expected entry status; and
providing a second context-based reaction to a signal received (A) from an intrusion detection device for which an association with an expected entry status is stored, the second context-based reaction being different from the first context-based reaction.

The invention is based on the concept of adding "intelligence" to the control unit so as to allow the control unit to react to different situations with different responses. This allows the user to interact better with the alarm system, thereby improving the user experience with the alarm system. Further, it allows the operator of the alarm system to more quickly understand if an alarm relates to a true alarm situation or in fact is a false alarm, thereby reducing operation costs for the alarm installation.

The context-based reaction of the control unit depends from the particular intrusion detection device (hereinafter for convenience referred to as "sensor") which sends the signal. Preferably, the sensor(s) associated with the entrance door(s) is/are marked in the control unit as belonging to an expected entry while all other sensors are marked in the control unit as belonging to an unexpected entry. Assuming that the control unit receives a signal from the sensor or one of the sensors associated with the designated entry, the context-based reaction can be a friendly welcome message. Assuming that a signal is received from a sensor associated with an unexpected entry, the context-based reaction can be a request to identify oneself or to enter a pin or code at the user interface. In this second situation, the context-based reaction can also comprise sending a message to the operation centre, in particular to a call centre where it is added to the queue of incoming calls which require attention, with a low priority being given to this message. Nevertheless, the message is already in the queue so that it can be taken care of very quickly should the predefined time period lapse without the alarm system having been disarmed.

The context-based reaction of the control unit can also involve choosing different length for the time period allowed for disarming the alarm system, depending from the particular intrusion device which sends the signal. Assuming that the user interface is arranged close to the door which is marked in the control unit as designated entry, the predefined time period can be shorter than the time period which is available for disarming the alarm system in case a signal is received from a sensor associated with an unexpected entry in the basement. The reverse can also possibly be true - a break in may be more likely via a non-designated entry and then time is of the essence.

The context-based reaction can consist in choosing a different tone of the invitation to the user to disarm the alarm system, depending from the particular intrusion detection device which sends the signal. Assuming that the signal is generated by a sensor associated with an expected entry, the tone can be very friendly. Assuming that the signal is received from a sensor associated with an unexpected entry, the tone of the invitation to disarm the alarm system can be more firm.

The context-based reaction can also depend from the nature of the signal received from the intrusion detection device. Assuming that a "normal" signal is received which indicates that a door was opened, the context-based reaction can be an invitation to the user to disarm the system. Assuming that the signal indicates that there was an attempt to tamper with the sensor or to break a window, the context-based reaction can be a message to the user urging him to check the respective door or window, or can be an alarm message sent to the operation centre.

It is also possible that the context-based reaction is a text message displayed on a screen of the user interface. The text message can be a "welcome home" message, an indication of the status of the alarm system, an acknowledgement that the system has been disarmed, an indication which sensor has triggered a certain alarm status, or any other message which helps understand the user what is currently going on.

As an alternative or in addition to a text message, the context-based reaction can be a voice message delivered via a loudspeaker. The content of such message can basically be the same as with a text message.

These messages can be personalized messages which address the user with his or her name. It is also possible that the message is a warning message.

The context-based reaction can also involve displaying a plurality of options at the user interface and an invitation to the user to click on one of the options. This is in particular advantageous in case there is a certain alarm situation which in fact is a false alarm as this allows the user to "reset" the alarm system so as to prevent that unnecessary action is being taken by the operation centre. One example is that a window sensor sends a signal which indicates that there is a strong vibration at one of the windows. The context-based reaction can be an invitation to the user to confirm that there is suspicious activity or to confirm that he is positive that no suspicious activity has occurred (for example because a child has kicked a football against the window). Another scenario is that the smoke detector detects smoke in the kitchen. The context-based reaction can be an invitation to the user to confirm that there might be a fire in the kitchen or to confirm that there is a false alarm (for example because he or she is cooking dinner). The context-based reaction can in the latter scenario also involve disarming the smoke detector for a predefined time period in order to prevent that there will be new false alarms subsequently.

The context-based reaction can also be an alarm sound which is emitted via a loudspeaker or a siren. This reaction can be chosen as an alternative to a voice message which is an invitation to the user to disarm the system, in a scenario where a more severe reaction of the alarm system is required.

According to an embodiment, the volume of the alarm sound is reduced when the presence of a user is detected in the vicinity of the user interface. This reduces the level of stress for the user when he or she has approached the user interface with the intension of disarming the alarm system. Further, it allows the user to more conveniently communicate with personal from the operation centre via the user interface in case there is need for personal assistance.

The volume of the alarm sound is reduced for long enough for the user to identify himself e.g. through biometrics or entering a password. If there is no identification within a predefined time period, the volume is again increased.

According to an aspect of the invention, the alarm system is configures such that an alarm (potentially of several) is located near or in the same unit as the alarm peripheral which the user uses to (i) contact the remote monitoring site (ii) control the alarm system. This may be done to save costs, reduce the number of peripherals needed for the system to operate etc.

One of the alarm peripherals which the user uses to contact the remote monitoring site (the operation centre) is a unit which comprises one or several microphones, a touch screen and a possibly a video camera. This allows a direct and personal interaction with an operator at a monitoring site.

This unit can be adapted for proximity detection, in particular for detecting the presence of a user. If the presence of a user is detected, the alarm sound can be reduced for some time. Presence of a user can be detected via a passive IR sensor, via an accelerometer, voice recognition, etc.

If this unit with a screen is used as part of the alarm installation, one context-based reaction can be the content of what is displayed on the screen. In an alarm situation, an alarm message is displayed. When the presence of a user is detected, a more welcoming message can be displayed on the screen, inviting the user to connect to the operation centre and/or to confirm if there is an alarm situation or if there is a false alarm.

The context-based reaction can also involve the activation of a camera and/or a microphone. This is advantageous as it allows to distinguish between a true alarm situation and a false alarm. Assuming that a sensor associated with a window has sent a signal while the alarm system is in a state which corresponds to "nobody at home", activating a camera and/or a microphone allows personal at the operation centre to obtain additional information. Should there be no further activity or noise, it can be assumed that there was a false alarm. Should there be suspicious noise or activity, an alarm can be triggered by the operation centre, and guards, an emergency service and/or the police can be notified.

The context-based reaction can also involve sending a note to a remote operation centre. The note can involve the nature of the event which triggered an alarm, can comprise a sound sequence and/or a video sequence captured with the microphones and/or a camera of the alarm system, or can comprise information collected from the user by making him choose from options displayed at the user interface.

The context-based reaction can also consist of establishing a communication with an operator at the remote operation centre. The operator can then clarify with the user if immediate assistance is necessary, can make suggestions to the user how to best react to the particular situation, or can allow the user to indicate that there was a false alarm.

The context-based reaction can also consist of emitting a distress call to a guard or an emergency service so that personal assistance is provided as quickly as possible.

The control unit preferably takes into account signals from other sensors, such as a smoke detector, a proximity sensor at the user interface, an anti-tampering sensor at the user interface or the control unit, etc. The more information is available to the control unit, the higher the likelihood that the context-based reaction is appropriate to the particular situation.

The context-based reaction can be the interaction with a predefined cell phone. In particular, the reaction can involve calling a first cell phone and then, if there is no response, a second, a third, etc. cell phone until someone is reached.

The context-based reaction can also involve an hand-over of the communication to a cell phone. This is particular advantageous in situations in which the alarm situation involves a high likelihood that the user leaves the building, for example if there is a fire alarm or the detection of an intrusion at a remote location of the building. The hand-over allows for example an operator at the operation centre to remain in a continued personal contact with the user for providing appropriate advice, increasing the level of security for the user.

The user interface can comprise a presence detection unit, the presence detection unit being adapted for detecting the presence of predefined identifiers. Predefined identifiers can be key fobs, RFID chips or similar electronic devices which are assigned to a specific user. If a user disarms the alarm system with "his" key fob or chip, the user interface can provide a personalized message to the user.

The user interface can in particular be a screen, most preferably a touch screen. Such screen offers a great flexibility for interacting with the user allowing interactions ranging from the simple display of a system status or a text message over offering different options from which the user can choose, showing video sequences of the place where an alarm was triggered, to a live communication channel with an operator at an operation centre.

Preferably, the user interface has a proximity detector for detecting the proximity of a user as this allows choosing the context-based reaction with higher precision.

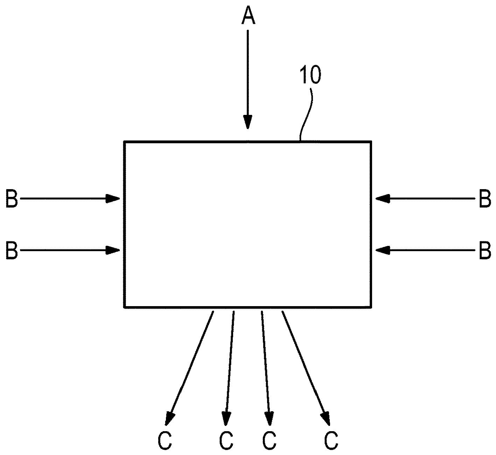

In the enclosed drawing, a control unit 10 is schematically shown.

Arrow A symbolizes a signal from an intrusion detection device.

Arrows B symbolize other information which is available to control unit 10. This information can comprise:
the location of the particular intrusion detection device which sends the signal;
the nature of the signal received from the intrusion detection device;
the presence of a user at an interface unit;
the lapse of predefined time periods;
the lack of expected interactions within a predefined time period.

Arrows C symbolize different context-based reaction of control unit 10. These reactions can comprise:
an alarm sound which is being emitted via a loudspeaker, the volume of the alarm sound being adapted to the particular situation (e.g. the volume of the alarm sound being reduced when the presence of a user is detected in the vicinity of the user interface);
a text message displayed on a screen of the user interface;
a voice message delivered via a loudspeaker;
displaying a plurality of options at the user interface and an invitation to the user to click on one of the options;
an activation of a camera and/or a microphone;
a note which is being sent to a remote operation centre;
establishing a communication with an operator;
emitting a distress call to a guard or an emergency service;
an interaction with a predefined cell phone;
a hand-over of the communication to a cell phone.

Within the scope of the invention, any possible combination of the options mentioned above can be implemented as one embodiment of the method and the alarm system according to the invention.

The following numbered paragraphs present various aspects of the invention in a simple codified form.
i) A method of operating an alarm system for a building, the method comprising the following steps:
   - upon receipt of a signal from an intrusion detection device, a control unit starts a time period within which a user is invited to disarm the alarm system,
   - upon lapse of the predefined time period, the control unit choses one of a plurality of predefined context-based reactions which depend from the particular intrusion detection device which sends the signal.
ii) The method of paragraph i) wherein the context-based reaction is an alarm sound which is being emitted via a loudspeaker.
iii) The method of paragraph ii) wherein the volume of the alarm sound is being reduced when the presence of a user is detected in the vicinity of the user interface.
iv) The method of any of the preceding numbered paragraphs wherein the length of the time period depends from the particular intrusion detection device which sends the signal.
v) The method of any of the preceding numbered paragraphs wherein the tone of the invitation to the user to disarm the alarm system depends from the particular intrusion detection device which sends the signal.
vi) The method of any of the preceding numbered paragraphs wherein the context-based reaction depends from the nature of the signal received from the intrusion detection device.
vii) The method of any of the preceding numbered paragraphs wherein the context-based reaction is a text message displayed on a screen of the user interface.
viii) The method of any of the preceding numbered paragraphs wherein the context-based reaction is a voice message delivered via a loudspeaker.
ix) The method of paragraph vii) or ix) wherein the message is a personalized message.
x) The method of any of paragraphs vii) or viii) wherein the message is a warning message.
xi) The method of any of the preceding numbered paragraphs wherein the context-based reaction is displaying a plurality of options at the user interface and an invitation to the user to click on one of the options.
xii) The method of any of the preceding numbered paragraphs wherein the context-based reaction is the activation of a camera and/or a microphone.
xiii) The method of any of the preceding numbered paragraphs wherein the context-based reaction is a note which is being sent to a remote operation centre.
xiv) The method of any of the preceding numbered paragraphs wherein the context-based reaction is establishing a communication with an operator.
xv) The method of any of the preceding numbered paragraphs wherein the context-based reaction is emitting a distress call to a guard or an emergency service.
xvi) The method of any of the preceding numbered paragraphs wherein the control unit takes into account the signal from at least one additional sensor, e.g. a smoke detector.
xvii) The method of any of the preceding numbered paragraphs wherein the context-based reaction depends from on the location of a particular intrusion detection device which sends the signal.
xviii) The method of any of the preceding numbered paragraphs wherein the context-based reaction is an interaction with a predefined cell phone.
xix) The method of any of the preceding numbered paragraphs wherein the context-based reaction is a hand-over of the communication to a cell phone.
xx) Alarm system for a building, having a control unit, a sound generating device, a user interface, a disarming interface, and at least one intrusion detection device, the control unit having a reaction strategy module receiving signals from at least the disarming interface, the user interface and the at least one intrusion detection device for choosing a context-based reaction strategy, in particular according to a method of any of the preceding claims.
xxi) The alarm system of paragraph xx) wherein the user interface comprises a presence detection unit, the presence detection unit being adapted for detecting the presence of predefined identifiers.
xxii) The alarm system of paragraph xx) or xxi) wherein the user interface is a screen.
xxiii) The alarm system of paragraph xxii) wherein the screen is a touch screen.
xxiv) The alarm system of any of paragraphs xx) to xxiii) wherein the user interface has a proximity detector for detecting the proximity of a user.
xxv) Alarm installation comprising an alarm system as defined in any of paragraphs xx) to
xxiv) and a remote operation centre, the control unit of the alarm system being connected to the operation centre via internet and/or a mobile network (e.g.GSM).

## Claims

**1.** A control unit for an alarm system for a home, the home having multiple points of entry, the points of entry including at least one entrance door and at least one other possible point of entry to the home, the alarm system having a sound generating device, a user interface, a disarming interface and intrusion detection devices for possible points of entry to the home, the intrusion detection devices associated with the entrance door(s) being marked in the control unit (10) as an expected entry and the all other intrusion detection devices each being marked as an unexpected entry in the control unit (10),
the control unit having a reaction strategy module to choose a context-based reaction (C), the reaction strategy module being arranged to receive signals from at least the disarming interface, the user interface and the intrusion detection devices;
the control unit storing:
an association between an expected entry status and a first intrusion detection device, the first intrusion detection device being associated with an entrance door of the building;
an association between an unexpected entry status and one of the other intrusion detection devices;
the control unit storing for each of the intrusion detection devices an association with either an expected entry status or an unexpected entry status;
and the control unit being configured to:
react to a signal (A) received from an intrusion detection device for which there is stored an association with an expected entry status by providing a first response; and
react to a signal received from an intrusion detection device for which an association with an unexpected entry status is stored by providing a second response different from the first response.

**2.** The control unit of claim 1, wherein in the event that the signal (A) is received from an intrusion detector marked as an unexpected entry the context-based reaction (C) comprises sending a message to a remote operation centre.

**3.** The control unit of claim 1, wherein context-based reaction (C) depends upon the nature of the signal (A) received from the intrusion detection device.

**4.** The control unit of claim 3, wherein in the event that the signal indicates that there was an attempt to tamper with the sensor or to break a window, the context-based reaction (C) is a message to the user urging the user to check the respective door or window, or an alarm message sent to a remote operation centre.

**5.** The control unit of any one of claims 1 to 3, wherein the context-based reaction (C) is the activation of a camera and/or a microphone.

**6.** The control unit of claim 1, wherein the context-based reaction (C) involves choosing a different length for the time period allowed for disarming the alarm system, depending upon the particular intrusion device which sent the signal (A).

**7.** The control unit of claim 1, wherein the context-based reaction (C) involves choosing a different tone of the invitation to the user to disarm the alarm system, depending upon the particular intrusion detection device which sent the signal (A).

**8.** The control unit of claim 1, wherein the context-based reaction (C) is an alarm sound which is emitted via a loudspeaker.

**9.** The control unit of claim 8, wherein the volume of the alarm sound is reduced when the presence of a person is detected in the vicinity of the disarming interface.

**10.** The control unit of any of the preceding claims wherein the context-based reaction (C) comprises establishing communication with an operator.

**12.** The control unit of any of the preceding claims wherein the context-based reaction (C) comprises emitting a distress call to a guard or an emergency service.

**13.** An alarm system for a home, the home having multiple points of entry, the points of entry including at least one entrance door and at least one other possible point of entry to the home, the alarm system having a sound generating device, a user interface, a disarming interface and intrusion detection devices for possible points of entry to the home, and a control unit according to any one of the preceding claims, the intrusion detection devices associated with the entrance door(s) being marked in the control unit (10) as an expected entry and the all other intrusion detection devices each being marked as an unexpected entry in the control unit (10).

**14.** An alarm installation comprising an alarm system as defined in claim 13 installed in a home having multiple points of entry, the points of entry including at least one entrance door and at least one other possible point of entry to the home, and a remote operation centre, the control unit (10) of the alarm system being connected to the operation centre via the Internet and/or a mobile network (e.g. GSM).

**15.** A method performed by a control unit (10) of an alarm system for a home having multiple points of entry, the points of entry including at least one entrance door and at least one other possible point of entry to the home, intrusion detection devices being provided for possible points of entry, the intrusion detection devices associated with the entrance door(s) being marked in the control unit (10) as an expected entry and all the other intrusion detection devices each being marked as an unexpected entry in the control unit (10), the method comprising the control unit (10) providing a first context-based reaction to a signal (A) received from an intrusion detection device for which there is stored an association with an expected entry status; and
providing a second context-based reaction to a signal received (A) from an intrusion detection device for which an association with an expected entry status is stored, the second context-based reaction being different from the first context-based reaction.
